(19) Europäisches Patentamt
European Patent Office
Office européen des brevets

(11) EP 0 471 993 B1

(12) **EUROPEAN PATENT SPECIFICATION**

(45) Date of publication and mention of the grant of the patent:
**06.11.1996 Bulletin 1996/45**

(51) Int Cl.6: **C08F 283/12**

(21) Application number: **91112340.4**

(22) Date of filing: **23.07.1991**

# (54) Polyorganosiloxane graft copolymers

Polyorganosiloxan-Pfropfcopolymere

Copolymères greffés de polyorganosiloxanes

(84) Designated Contracting States:
**BE DE FR GB IT NL**

(30) Priority: **24.07.1990 JP 195267/90**

(43) Date of publication of application:
**26.02.1992 Bulletin 1992/09**

(73) Proprietor: **MITSUBISHI RAYON CO., LTD.**
**Tokyo 104 (JP)**

(72) Inventors:
- **Yamamoto, Naoki,**
**c/o Central Research Laboratories**
**Otake-shi, Hiroshima 739-06 (JP)**
- **Nakata, Akira,**
**c/o Central Research Laboratories**
**Otake-shi, Hiroshima 739-06 (JP)**
- **Koshirai, Atsunori, c/o Central Research Lab.**
**Otake-shi, Hiroshima 739-06 (JP)**

(74) Representative:
**TER MEER - MÜLLER - STEINMEISTER & PARTNER**
**Mauerkircherstrasse 45**
**81679 München (DE)**

(56) References cited:

| | |
|---|---|
| **EP-A- 0 246 537** | **EP-A- 0 332 188** |
| **GB-A- 916 529** | **US-A- 3 519 702** |

Remarks:
The file contains technical information submitted after the application was filed and not included in this specification

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).



Printed by Jouve, 75001 PARIS (FR)

**Description**

BACKGROUND OF THE INVENTION

Field of the Invention

The present invention relates to a polyorganosiloxane graft copolymer excellent in impact resistance, low-temperature characteristics and weather resistance, and further giving molded products excellent in bond strength to paint film applied thereon.

Description of the Related Art

As thermoplastic resins excellent in impact resistance, low-temperature characteristics and weather resistance, a polyorganosiloxane graft copolymer obtained by graft-polymerizing a monomer having an ethylenically unsaturated bond (e.g. acrylonitrile, styrene-) onto polyorganosiloxane rubber is disclosed in JP-A-61-106614. Also, a graft copolymer obtained by graft-polymerizing particular amounts of an epoxy group-containing vinyl monomer and other vinyl monomer onto a polyorganosiloxane polymer copolymerized with a graft-linking agent as copolymer component is disclosed in JP-A-2-138360.

However, the former graft copolymer disclosed in JP-A-61-106614 has problems although it is excellent in impact resistance, low-temperature characteristics and weather resistance. Firstly, in the course of production of the graft copolymer, an organosiloxane oligomer which is very difficult to remove from the graft copolymer is produced as by-product. Secondly, when the graft copolymer is molded, this oligomer blooms out to the surface of the molded product, so that when the molded product is painted, the bond strength of the paint film is low. Similarly, the graft copolymer disclosed in JP-A-2- 138360 also has problems although it is excellent in impact resistance, low-temperature characteristics and weather resistance. That is, the adhesion property of paint film applied to the molded product of this graft copolymer is not of very high level, and besides the above adhesion property becomes quite poor as the amount of the polyorganosiloxane polymer in the graft copolymer becomes large.

EP-A-0 246 537 discloses high impact graft copolymers comprising a core (a) of a cross-linked silicone rubber, a first cladding (b) of a cross-linked acrylate rubber, and a second cladding (c) consisting of a polymer or copolymer formed from resin-forming monomers.

EP-A-0 332 188 discloses a thermoplastic resin composition comprising a compound-rubber-based graft copolymer which is obtained by graft-polymerizing one or more vinyl monomers onto compound rubber particles having a structure in which 10-90 % by weight of a polyorganosiloxane rubber component and 90-10 % by weight of a polyalkyl (meth)acrylate rubber component are tangled together so as not to be separable from each other.

SUMMARY OF THE INVENTION

In view of the situation mentioned above, the present inventors have extensively studied to obtain a resin excellent in impact resistance, low-temperature characteristics and weather resistance as well as in bond strength to paint film applied to the molded product of the resin. As a result, the present inventors have found that a polyorganosiloxane graft copolymer obtained by graft-polymerizing one or more kinds of monomer which have an ethylenically unsaturated bond and contain at least an epoxy group-containing vinyl monomer onto a compound rubber in which a polyorganosiloxane rubber and a polyalkyl(meth)acrylate rubber have been inseparably united with each other (hereinafter referred simply to as compound rubber) and besides containing a particular proportion of the component derived from the epoxy group-containing vinyl monomer, satisfies all of the performances described above. The present inventors thus attained to the present invention.

Further, this polyorganosiloxane graft copolymer is also useful as adhesives, and particularly it exhibits excellent adhesion performance in laminating aromatic polymers such as polyesters (e.g. polyethylene terephthalate), polyphenylene oxides and polyphenylene sulfides.

Accordingly, the present invention provides a polyorganosiloxane graft copolymer obtained by graft-polymerizing one or more kinds of monomer which have ethylenically unsaturated bond and contain at least an epoxy group-conataining vinyl monomer onto a compound rubber which is obtained by polymerizing an alkyl(meth)acrylate, a crosslinking agent for polyalkyl(meth)acrylate rubber and a graft-linking agent for polyalkyl(meth)acrylate rubber in the presence of a polyorganosiloxane rubber obtained by emulsion-polymerizing an organosiloxane, a crosslinking agent for polyorganosiloxane rubber and, if necessary, a graft-linking agent for polyorganosiloxane rubber in an amount of 0-10 wt.-% of the po-lyorganosiloxane rubber, whereby the polyorganosiloxane rubber component and the polyalkyl(meth)acrylate rubber component have been entangled and inseparably united with each other at the interface of both to form a crosslinked network, wherein the amount of the polyorganosiloxane rubber component is 1 to 99 wt.% and the amount

of the polyalkyl(moth)acrylate rubber component is 99 to 1 wt.%, such that the total amount of both components is 100 wt.%, and in which the component derived from the epoxy group-containing vinyl monomer occupies a proportion of 1 to 30 wt.% of the whole graft copolymer.

## DESCRIPTION OF THE PREFERRED EMBODIMENTS

The polyorganosiloxane rubber constituting the graft copolymer of the present invention can be obtained in the form of fine particle by emulsion polymerization of organosiloxane, a crosslinking agent for polyorganosiloxane rubber (hereinafter referred to as crosslinking agent (I)) and if necessary a graft-linking agent for the polyorganosiloxane rubber (hereinafter referred to as graft-linking agent (I)).

As the organosiloxane used to prepare the polyorganosiloxane rubber, three or more-membered cyclic organosiloxanes are used, among which three to six-membered ones are preferably used. Examples of such the cyclic organosiloxane include hexamethylcyclotrisiloxane, octamethylcyclotetrasiloxane, decamethylcyclopentasiloxane, dodecamethylcyclohexasiloxane, trimethyltriphenylcyclotrisiloxane, tetramethyltetraphenylcyclotetrasiloxane and octaphenylcyclotetrasiloxane.

As the crosslinking agent (I) used to prepare the polyorganosiloxane rubber, trifunctional or tetrafunctional silanes, i.e. trialkoxyalkylsilanes or trialkoxyarylsilanes or tetraalkoxysilanes are used. Specific examples of such crosslinking agent (I) include trimethoxymethylsilane, triethoxyphenylsilane, tetramethoxysilane, tetraethoxysilane, tetra-n-propoxysilane and tetrabutoxysilane. Tetraalkoxysilanes are preferred, among which tetraethoxysilane is particularly preferably used.

As the graft-linking agent (I) used if necessary to prepare the polyorganosiloxane rubber, compounds which can form a unit represented by either one of the formulae (I-1); (I-2), (I-3) and (I-4) are used:

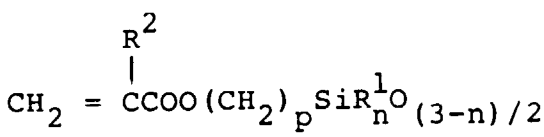

(I-1)

$$CH_2 = CHSiR^1_nO_{(3-n)/2} \qquad (I-2)$$

$$HS(CH_2)_pSiR^1_nO_{(3-n)/2} \qquad (I-3)$$

or

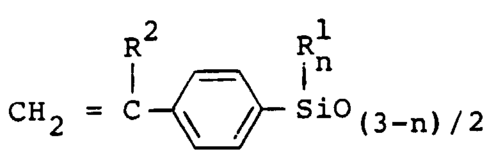

(I-4)

wherein $R^1$ represents a methyl, ethyl, propyl or phenyl group, $R^2$ represents a hydrogen atom or a methyl group, n represents an integer of 0, 1 or 2, and p represents an integer of 1 to 6.

(Meth)acryloyloxyalkylsiloxane which can form the unit represented by the formula (I-1), because of its high grafting efficiency, can form graft chains effectively, so that it is advantageous in terms of development of impact resistance. Among (meth)acryloyloxyalkylsiloxanes, methacryloyloxyalkylsiloxane is preferred. Specific examples of methacryloyloxyalkylsiloxane include β-methacryloyloxyethyldimethoxymethylsilane, γ-methacryloyloxypropylmethoxydimethysilane, γ-methacryloyloxypropyldimethoxymethylsilane, γ-methacryloyloxypropyltrimethoxysilane, γ-methacryloyloxypropylethoxydiethylsilane, γ-methacryloyloxypropyldiethoxymethylsilane and δ-methacryloyloxybutyldiethoxymethylsilane. Vinylsiloxane which can form the unit represented by the formula (I-2) includes vinylmethyldimethoxysilane and vinyltrimethoxysilane. Mercaptosiloxane which can form the unit represented by the formula (I-3) includes γ-mercaptopropyldimethoxymethylsilane, γ-mercaptopropyltrimethoxysilane and γ-mercaptopropyldiethoxyethylsilane. Compounds which can form the unit represented by the formula (I-4) include p-vinylphenylmethyldimethoxysilane.

The amount of the component derived from the cyclic organosiloxane is 60 wt.% or more, preferably 70 wt.% or more of the polyorganosiloxane rubber. The amount of the component derived from the crosslinking agent (I) is 0.1 to 30 wt.% thereof, and that of the component derived from the graft-linking agent (I) is 0 to 10 wt.%, preferably 0.1 to 10 wt.% thereof.

For producing the latex of this polyorganosiloxane rubber component, methods described, for example, in US-A-2891920 and US-A-3294725 can be used. In practicing the present invention, it is preferred to produce the latex by the method in which a mixed solution of organosiloxane, the crosslinking agent (I) and if necessary the graft-linking agent (I) is shear-mixed with water with, for example, a homogenizer in the presence of a sulfonic acid emulsifier such as an alkylbenzenesulfonic acid and an alkylsulfonic acid. As the sulfonic acid emulsifier, an alkylbenzenesulfonic acid is preferably used because it acts as an emulsifier for organosiloxane and at the same time acts as a polymerization initiator. In this case, it is preferred to use the metal salt of the alkylbenzenesulfonic acid or an alkylsulfonic acid together with the above sulfonic acid because the metal salt has an effect to keep the emulsified state of the polymer stable during the graft polymerization.

The compound rubber used in the present invention is one which has such a structure that 1 to 99 wt.% of the polyorganosiloxane rubber component and 99 to 1 wt.% of the polyalkyl (meth)acrylate rubber component have been inseparably united with each other, and in which the total amount of both the components is 100 wt.%.

When the compound rubber in which the amount of the polyorganosiloxane rubber component exceeds 99 wt.% is used, the graft copolymer obtained gives molded products having a reduced bond strength to paint film applied thereon. When the compound rubber in which the amount of the polyalkyl (meth)acrylate rubber component exceeds 99 wt.% is used, the graft copolymer obtained is low in impact resistance. Due to this, the compound rubber used in the present invention needs to be one in which the amount of any one of both the rubber components constituting it is in a range of 1 to 99 wt.%, provided that the total amount of both the components is 100 wt.%. Preferably, the amount of the polyorganosiloxane rubber component is 5 to 80 wt.%, and that of the polyalkyl (meth)acrylate rubber component is 95 to 20 wt.%.

For producing the compound rubber, it is desirable to use the emulsion polymerization method. That is, it is desirable to firstly prepare the polyorganosiloxane rubber by the emulsion polymerization method, and then to subject the monomer for synthesizing the polyalkyl (meth)acrylate rubber to emulsion polymerization in the presence of the polyorganosiloxane rubber latex prepared above.

The polyalkyl (meth)acrylate rubber component constituting the compound rubber can be synthesized using an alkyl (meth)acrylate, a crosslinking agent for the polyalkyl (meth)acrylate rubber component (hereinafter referred to as crosslinking agent (II)) and a graft-linking agent for the same (hereinafter referred to as graft-linking agent (II)).

The alkyl (meth)acrylate includes alkyl acrylates (e.g. methyl acrylate, ethyl acrylate, n-propyl acrylate, n-butyl acrylate, 2-ethylhexyl acrylate) and alkyl methacrylates (e.g. hexyl methacrylate, 2-ethylhexyl methacrylate, n-lauryl methacrylate). Among these, n-butyl acrylate is preferably used.

As the crosslinking agent (II), polyfunctional (meth)acrylates can be used. Specific examples thereof include ethylene glycol dimethacrylate, propylene glycol dimethacrylate, 1,3-butylene glycol dimethacrylate, 1,4-butylene glycol dimethacrylate and allyl methacrylate.

As the graft-linking agent (II), compounds having two kinds of unsaturated group different in reactivity therebetween are used. Examples of such the compound include allyl methacrylate, triallyl cyanurate, and triallyl isocyanurate. The three allyl groups of both triallyl cyanurate and triallyl isocyanurate seem to have reactivity of the same level, but after a first allyl group has reacted, second and third allyl groups react in different reactivity from that of the first one. Triallyl cyanurate and triallyl isocyanurate, therefore, can be considered to have unsaturated groups different in reactivity. In the case of allyl methacrylate having two unsaturated groups, one of the groups having lower reactivity also reacts in part during polymerization to work as crosslinking site, but does not react in full, so that the remaining unsaturated group works as grafting site during the subsequent graft polymerization.

These crosslinking agents (II) and graft-linking agents (II) can be used alone or in combination of two or more of them. Hereupon, it is desirable to cause allyl methacrylate to own the functions of the both, i.e. to use allyl methacrylate both as a crosslinking agent for the polyalkyl (meth)acrylate rubber and as a graft-linking agent for the same.

The amount of any one of these crosslinking agent (II) and graft-linking agent (II) used is 0.1 to 10 wt.% of the polyalkyl (meth)acrylate rubber component. When allyl methacrylate is used as both the crosslinking agent (II) and the graft-linking agent (II), an effect that there is no need to further use other crosslinking agent (II) and graft-linking agent (II) is obtained by using the allyl methacrylate in amounts of 0.2 to 20 wt.% of the polyalkyl (meth)acrylate rubber component.

The polyalkyl (meth)acrylate rubber component can be formed by adding the above alkyl (meth)acrylate, crosslinking agent (II) and graft-linking agent (II) to the polyorganosiloxane rubber latex and subjecting the mixture to polymerization. These alkyl (meth)acrylate and both agents (II) may be added either in one portion or dropwise to the polymerization system.

With the progress of the polymerization, the polyalkyl (meth)acrylate rubber component formed by the polymerization and the polyorganosiloxane rubber component are entangled and united with each other at the interface of the both to form a crosslinked network. Particularly, when the graft-linking agent (I) has been used in producing the polyorganosiloxane rubber component, grafting of the polyalkyl (meth)acrylate rubber component onto the polyorganosiloxane rubber component also takes place. In either case, a compound rubber latex which cannot substantially be separated into both the rubber components is obtained.

This compound rubber has a structure that the polyorganosiloxane rubber component and polyalkyl (meth)acrylate rubber component have been entangled in part, united with each other and crosslinked in that state, so that it cannot be separated into both the rubber components by extraction with usual organic solvents such as acetone and toluene.

A preferred compound rubber used in the present invention is one in which the component derived from the cyclic organosiloxane in the polyorganosiloxane rubber component has a repeating unit of dimethylsiloxane, and the component derived from an alkyl (meth)acrylate in the polyalkyl (meth)acrylate rubber component has a repeating unit of n-butyl acrylate.

The compound rubber thus obtained is graftcopolymerizable with a monomer having an ethylenically unsaturated bond, particularly a vinyl monomer.

The polyorganosiloxane graft copolymer of the present invention is obtained by graft-polymerizing one or more kinds of monomer which have an ethylenically unsaturated bond and contain an epoxy group-containing vinyl monomer onto this compound rubber. If the graft copolymer is constituted so that the component derived from the epoxy group-containing vinyl monomer is contained in amounts of 1 to 30 wt.%, preferably 2 to 30 wt.% of the graft copolymer, other monomer having an ethylenically unsaturated bond than the epoxy group-containing vinyl monomer may be graft-polymerized together.

The epoxy group-containing vinyl monomer includes glycidyl methacrylate, glycidyl acrylate, vinyl glycidyl ether, allyl glycidyl ether, glycidyl ether of hydroxyalkyl (meth)acrylate, glycidyl ether of polyalkylene glycol (meth)acryalte and glycidyl itaconate. Among these, glycidyl methacrylate is preferably used.

The monomer having an ethylenically unsaturated bond copolymerizable with the epoxy group-containing vinyl monomer includes aromatic alkenyl compounds (e.g. styrene, halogen-substituted styrene, α-methylstyrene, vinyltoluene, vinylpyridine), methacrylates (e.g. methyl methacrylate, 2-ethylhexyl methacrylate), acrylates (e.g. methyl acrylate, ethyl acrylate, butyl acrylate) and vinyl cyanide compounds (e.g. acrylonitrile, methacrylonitrile). These monomers are used alone or in combination of two or more of them.

The proportion of the component derived from the grafted monomer having an ethylenically unsaturated bond, particularly grafted vinyl monomer in the graft copolymer is preferably 5 to 95 wt.%, more preferably 10 to 90 wt.%, most preferably 10 to 50 wt.% when the weight of the graft copolymer is taken as 100%.

Also, it is desirable for the polyorganosiloxane graft copolymer of the present invention to have an average particle size ranging from 0.08 to 0.6 μm. When the average particle size is less than 0.08 μm, it becomes difficult to obtain sufficient impact strength, and when it is larger than 0.6 μm, there is a fear that the graft copolymer obtained gives molded products having a poor surface appearance.

The polyorganosiloxane graft copolymer having such the average particle size can be obtained by one-stage or multi-stage emulsion graft-polymerization of one or more kinds of monomer containing the epoxy group-containing vinyl monomer in the presence of the above compound rubber latex. When the multi-stage graft-copolymerization is carried out using the epoxy group-containing vinyl monomer and other monomer than the one above as the aforementioned one or more kinds of monomer containing the epoxy group-containing vinyl monomer, it is desirable to add the epoxy group-containing vinyl monomer at the last stage of the graft polymerization.

In this graft polymerization, the component alone corresponding to the branch of the graft copolymer, which refers herein to a component derived from one or more kinds of monomer which have an ethylenically unsaturated bond and contain the epoxy group-containing vinyl monomer, polymerizes by itself without grafting onto a trunk component which refers herein to the compound rubber, to produce the so-called free polymer as by-product. In other words, a mixture of the desired graft copolymer and the free polymer is obtained by the graft polymerization. In the present invention, however, this mixture is referred to as "graft copolymer".

The polyorganosiloxane graft copolymer of the present invention is excellent in impact resistance, low-temperature characteristics and weather resistance, and when molded and painted, gives molded products excellent in adhesion to paint film. Further, it is also useful as adhesives, being able to be used for adhesion of metals (e.g. aluminum), wood, paper or glass, and adhesion of various structural laminates. Particularly, it is useful as reactive hot melt adhesives for adhesion of aromatic polymer molded products.

The above aromatic polymer includes aromatic polyesters such as polyethylene terephthalate, polybutylene terephthalate, polyethylene terephthalate·isophthalate, polyethylene-2,6-naphthalenedicarboxylate, polyphenylene terephthalate, bisphenol A/terephthalic acid polycondensate, and bisphenol A/terephthalic acid/ isophthalic acid copolycondensate, substituted or unsubstituted polyphenylene oxide and substituted or unsubstituted polyphenylene sulfide. Among these, polyethylene terephthalate, polybutylene terephthalate, substituted or unsubstituted polyphenylene oxide and substituted or unsubstituted polyphenylene sulfide can be given as a preferred object to be adhered

with the graft copolymer of the present invention.

The present invention will be illustrated in more detail with reference to the following examples and comparative examples.

In the examples and comparative examples, "part" and "percent (%)" mean "part by weight" and "wt.%", respectively, unless otherwise stated. The physical properties in the above examples were measured by the following methods.

Adhesion property of paint film:

A flat plate was prepared by molding the polyorganosiloxane graft copolymer, and its surface was coated with a two-component acrylic urethane paint (reaction product of tolylenediisocyanate with acrylic polyol). After drying, 11 parallel grooves were cut into the coated surface at intervals of 1 mm in one direction, and the same procedure was repeated in the direction perpendicular thereto, thereby forming 100 grid patterns of 1 $mm^2$. A cellophane adhesive tape was applied over the cross-hatched area and peeled off the area in the vertical direction to the surface of the flat plate, and the number of the paint films peeled off the area was counted. The adhesion property of the paint film was evaluated according to the following standard:

The number of peeled paint films

◎ 10 or less
○ 11 to 20
Δ 21 to 40
X 41 or more

Izod impact strength:

Measured according to ASTM D-256 using a test piece with a 0.635 cm (1/4") notch.

Weather resistance:

The test piece was exposed for 1000 hours in a sunshine weatherometer, and the change of the color was examined by visual assessment. The weather resistance was evaluated according to the following standard:

○ No change
Δ Slight change to yellow
X Change to yellow

Average particle size:

Measured according to the quasi-elastic light scattering method (MALVERN SYSTEM 4600; measurement temperature, 25°C; angle of scattering, 90 degrees) using an aqueous dilute solution of the latex as sample solution.

Example 1

Two parts of tetraethoxysilane, 0.5 part of γ-methacryloyloxypropyldimethoxymethylsilane and 97.5 parts of octamethylcyclotetrasiloxane were mixed to obtain 100 parts of a siloxane mixture. One part of sodium dodecylbenzenesulfonate and 1 part of dodecylbenzenesulfonic acid were dissolved in 200 parts of distilled water, and to the resulting solution was added 100 parts of the above siloxane mixture. The resulting mixture was preliminarily stirred at 10000 rpm with a homomixer and then emulsified with a homogenizer under a pressure of 29.4 MPa (300 $kg/cm^2$) to obtain an organosiloxane latex. This latex was transferred to a separable flask equipped with a condenser and a stirring blade, and heated at 80°C for 5 hours with stirring and mixing and then allowed to stand at 20°C for 48 hours. Thereafter, this latex was neutralized to a pH of 7.0 with an aqueous sodium hydroxide solution to complete polymerization. Thus, a polyorganosiloxane latex (hereinafter referred to as POS-1) was obtained. The conversion of the siloxane mixture to the polyorganosiloxane rubber was 89.7%, and the average particle size of the polyorganosiloxane rubber was 0.16 μm.

One hundred and fifty parts of POS-1 was sampled and put in a separable flask equipped with a stirrer. After 185 parts of distilled water was added and the atmosphere of the flask was replaced by a nitrogen gas, the contents of the flask were heated to 50°C. At this temperature, a mixed solution of 45 parts of n-butyl acrylate, 0.9 part of allyl methacrylate and 0.108 part of tert-butyl hydroperoxide was added, after which stirring was continued for 30 minutes to allow these components to soak into the polyorganosiloxane rubber particles. Thereafter, a mixed solution of 0.001

part of ferrous sulfate, 0.003 part of disodium ethylenediaminetetraacetate, 0.108 part of Rongalite (sodium formaldehyde sulfoxylate) and 10 parts of distilled water was added to carry out radical polymerization. The reaction mixture was kept at an inner temperature of 70°C for 2 hours to complete the polymerization. Thus, a compound rubber latex was obtained. The conversion of the butyl acrylate rubber component was 98.8%.

Forty parts of this compound rubber latex was sampled, and 260 parts of distilled water and 0.5 part of sodium dodecylbenzenesulfonate were added thereto. Subsequently, a mixed solution of 10 parts of glycidyl methacrylate, 24 parts of acrylonitrile, 56 parts of styrene and 0.216 part of tert-butyl hydroperoxide was added and the atmosphere of the flask was replaced by a nitrogen gas, then the contents of the flask were heated to 50°C. Thereafter, a mixed solution of 0.001 part of ferrous sulfate, 0.003 part of disodium ethylenediaminetetraacetate, 0.108 part of Rongalite and 10 parts of distilled water was further added to carry out radical polymerization. Thereafter, the reaction mixture was kept at an inner temperature of 70°C for 4 hours to complete graft polymerization onto the compound rubber to obtain a graft copolymer latex. The conversion of glycidyl methacrylate, acrylonitrile and styrene was 97.5%, and the average particle size of the graft copolymer latex was 0.20 μm. The resulting graft copolymer latex was coagulated with an aqueous calcium chloride solution, and the resulting coagulated product was filtered off and dried to obtain the dry powder of a polyorganosiloxane graft copolymer (hereinafter referred to as S-1).

S-1 was pelletized by extruding it through an extruder at a barrel temperature of 230°C and molded into a flat plate of 100 mm x 100 mm x 3 mm with an injection molding machine ("IS-100" produced by Toshiba Machine Co., Ltd.) at a cylinder temperature of 230°C and a mold temperature of 60°C. The surface of this flat plate was degreased with methanol and painted with an acrylic urethane paint. The peeling test of this paint film was carried out. Under the same injection molding conditions as above, a test piece for evaluation of impact strength was prepared, and the impact resistance was evaluated. The results are shown in Table 1.

Example 2

A polyorganosiloxane graft copolymer of 0.20 μm in average particle size (hereinafter referred to as S-2) was obtained in the same manner as in Example 1 except that as a monomer mixture to be graft-polymerized onto the compound rubber latex, a mixture of 10 parts of glycidyl methacrylate and 80 parts of styrene was used in place of the mixture of 10 parts of glycidyl methacrylate, 24 parts of acrylonitrile and 56 parts of styrene. The resulting graft copolymer was evaluated in the same manner as in Example 1. The results are shown in Table 1.

Comparative Example 1

Thirty three parts of POS-1 obtained according to Example 1 was sampled, and 267 parts of distilled water and 0.5 part of sodium dodecylbenzenesulfonate were added thereto. Subsequently, a mixed solution of 10 parts of glycidyl methacrylate, 24 parts of acrylonitrile, 56 parts of styrene and 0.216 part of tert-butyl hydroperoxide was added and the atmosphere of the flask was replaced by a nitrogen gas. Then, the contents of the flask were heated to 50°C. Thereafter, a mixed solution of 0.001 part of ferrous sulfate, 0.003 part of disodium ethylenediaminetetraacetate, 0.108 part of Rongalite and 10 parts of distilled water was further added to carry out radical polymerization. Thereafter, the reaction mixture was kept at an inner temperature of 70°C for 4 hours to complete graft polymerization onto the polyorganosiloxane rubber to obtain a graft copolymer latex. The conversion of glycidyl methacrylate, acrylonitrile and styrene was 96.3%, and the average particle size of the graft copolymer latex was 0.21 μm. The resulting graft copolymer latex was coagulated with an aqueous calcium chloride solution, and the coagulated product was filtered off and dried to obtain the dry powder of a polyorganosiloxane graft copolymer (hereinafter referred to as S-3).

S-3 was evaluated in the same manner as in Example 1. The results are shown in Table 1.

Example 3

A polyorganosiloxane graft copolymer of 0.20 μm in average particle size (hereinafter referred to as S-4) was obtained in the same manner as in Example 1 except that as a monomer mixture to be graft-polymerized onto the compound rubber, a mixture of 20 parts of glycidyl methacrylate, 21 parts of acrylonitrile and 49 parts of styrene was used in place of the mixture of 10 parts of glycidyl methacrylate, 24 parts of acrylonitrile and 56 parts of styrene. The resulting graft copolymer was evaluated in the same manner as in Example 1. The results are shown in Table 1.

Example 4

A polyorganosiloxane graft copolymer (hereinafter referred to as S-5) was obtained in the same manner as in Example 1 except that the amount of the compound rubber latex sampled for graft copolymerization onto the compound rubber was 80 parts, the amount of distilled water to be added thereto was 230 parts, and that a mixture of 10 parts

of glycidyl methacrylate, 21 parts of acrylonitrile and 49 parts of styrene was used as a monomer mixture to be graft-polymerized. The resulting graft copolymer was evaluated in the same manner as in Example 1. The results are shown in Table 1. The conversion of glycidyl methacrylate, acrylonitrile and styrene was 98.1%, and the average particle size of the graft copolymer latex was 0.21 µm.

Example 5

A polyorganosiloxane graft copolymer (hereinafter referred to as S-6) was obtained in the same manner as in Example 1 except that the amount of the compound rubber latex sampled for graft copolymerization onto the compound rubber was 120 parts, the amount of distilled water to be added thereto was 200 parts, and that a mixture of 10 parts of glycidyl methacrylate, 18 parts of acrylonitrile and 42 parts of styrene was used as a monomer mixture to be graft-polymerized. The resulting graft copolymer was evaluated in the same manner as in Example 1. The results are shown in Table 1. The conversion of glycidyl methacrylate, acrylonitrile and styrene was 98.1%, and the average particle size of the graft copolymer latex was 0.20 µm.

Comparative Example 2

Ninety nine parts of POS-1 obtained in the same manner as in Example 1 was sampled, and 218 parts of distilled water and 0.5 part of sodium dodecylbenzenesulfonate were added thereto. Subsequently, a mixed solution of 10 parts of glycidyl methacrylate, 18 parts of acrylonitrile, 42 parts of styrene and 0.216 part of tert-butyl hydroperoxide was added to allow these components to soak into the polyorganosiloxane rubber particles. Thereafter, the atmosphere of the flask was replaced by a nitrogen gas, and the contents of the flask were heated to 50°C. Subsequently, a mixed solution of 0.001 part of ferrous sulfate, 0.003 part of disodium ethylenediaminetetraacetate, 0.108 part of Rongalite and 10 parts of distilled water was further added to carry out graft polymerization onto the polyorganosiloxane rubber. Thereafter, the reaction mixture was kept at an inner temperature of 70°C for 4 hours to complete the graft polymerization. Thus, the latex of a polyorganosiloxane graft copolymer was obtained. The resulting graft copolymer latex was coagulated with an aqueous calcium chloride solution, and the coagulated product was filtered off and dried to obtain the dry powder of a polyorganosiloxane graft copolymer (hereinafter referred to as S-7). S-7 was evaluated in the same manner as in Example 1. The results are shown in Table 1. The conversion of glycidyl methacrylate, acrylonitrile and styrene was 96.3%, and the average particle size of the graft copolymer latex was 0.20 µm.

Example 6

A polyorganosiloxane graft copolymer (hereinafter referred to as S-8) was obtained in the same manner as in Example 1 except that the amount of the compound rubber latex sampled for graft copolymerization onto the compound rubber was 160 parts, the amount of distilled water to be added thereto was 170 parts, and that a mixture of 10 parts of glycidyl methacrylate, 15 parts of acrylonitrile and 35 parts of styrene was used as a monomer mixture to be graft-polymerized. The resulting graft copolymer was evaluated in the same manner as in Example 1. The results are shown in Table 1. The conversion of glycidyl methacrylate, acrylonitrile and styrene was 98.1%, and the average particle size of the graft copolymer latex was 0.20 µm.

Example 7

A polyorganosiloxane graft copolymer (hereinafter referred to as S-9) was obtained in the same manner as in Example 1 except that the amount of the compound rubber latex sampled for graft copolymerization onto the compound rubber was 200 parts, the amount of distilled water to be added thereto was 140 parts, and that a mixture of 10 parts of glycidyl methacrylate, 12 parts of acrylonitrile and 28 parts of styrene was used as a monomer mixture to be graft-polymerized. The resulting graft copolymer was evaluated in the same manner as in Example 1. The results are shown in Table 1. The conversion of glycidyl methacrylate, acrylonitrile and styrene was 97.8%, and the average particle size of the graft copolymer latex was 0.18 µm.

Example 8

A polyorganosiloxane graft copolymer (hereinafter referred to as S-10) was obtained in the same manner as in Example 1 except that the amount of the compound rubber latex sampled for graft copolymerization onto the compound rubber was 240 parts, the amount of distilled water to be added thereto was 110 parts, and that a mixture of 10 parts of glycidyl methacrylate, 9 parts of acrylonitrile and 21 parts of styrene was used as a monomer mixture to be graft-polymerized. The resulting graft copolymer was evaluated in the same manner as in Example 1. The results are shown

in Table 1. The conversion of glycidyl methacrylate, acrylonitrile and styrene was 98.2%, and the average particle size of the graft copolymer latex was 0.18 µm.

Comparative Example 3

Two hundreds parts of POS-1 obtained in the same manner as in Example 1 was sampled, and 150 parts of distilled water and 0.5 part of sodium dodecylbenzenesulfonate were added thereto. Subsequently, a mixed solution of 10 parts of glycidyl methacrylate, 9 parts of acrylonitrile, 21 parts of styrene and 0.15 part of tert-butyl hydroperoxide was added to allow these components to soak into the polyorganosiloxane rubber particles. After the atmosphere of the reactor was replaced by a nitrogen gas, the reaction mixture was heated to 50°C, and at this temperature, a mixed solution of 0.001 part of ferrous sulfate, 0.003 part of disodium ethylenediaminetetraacetate, 0.1 part of Rongalite and 10 parts of distilled water was added to carry out graft polymerization onto the polyorganosiloxane rubber. Thereafter, the reaction mixture was kept at an inner temperature of 70°C for 4 hours to complete the graft polymerization. Thus, the latex of a polyorganosiloxane graft copolymer was obtained. The resulting graft copolymer latex was coagulated with an aqueous calcium chloride solution, and the coagulated product was filtered off and dried to obtain the dry powder of a polyorganosiloxane graft copolymer (hereinafter referred to as S-11). S-11 was evaluated in the same manner as in Example 1. The results are shown in Table 1. The conversion of glycidyl methacrylate, acrylonitrile and styrene was 96.5%, and the average particle size of the graft copolymer latex was 0.21 µm.

Comparative Example 4

A polyorganosiloxane graft copolymer (hereinafter referred to as S-12) was obtained in the same manner as in Example 1 except that as a monomer mixture to be graft-polymerized onto the compound rubber latex, a mixture of 27 parts of acrylonitrile and 63 parts of styrene was used in place of the mixture of 10 parts of glycidyl methacrylate, 24 parts of acrylonitrile and 56 parts of styrene. The resulting graft copolymer was evaluated in the same manner as in Example 1. The results are shown in Table 1.

Table 1

| | Rubber composition (part) (PDMS/PBA) | Composition of monomers to be grafted (parts) | | | Izod imapct strength | | Weather resistance | Adhesion property of paint film |
|---|---|---|---|---|---|---|---|---|
| | | GMA | AN | St | 23°C | 0°C | | |
| Example 1 | 5/5 | 10 | 24 | 56 | 15 | 13 | ○ | ◎ |
| Example 2 | 5/5 | 10 | - | 80 | 14 | 13 | ○ | ◎ |
| Comparative Example 1 | 10/0 | 10 | 24 | 56 | 17 | 16 | ○ | ○ |
| Example 3 | 5/5 | 20 | 21 | 49 | 15 | 14 | ○ | ◎ |
| Example 4 | 10/10 | 10 | 21 | 49 | 38 | 33 | ○ | ◎ |
| Example 5 | 15/15 | 10 | 18 | 42 | 49 | 42 | ○ | ◎ |
| Comparative Example 2 | 30/0 | 10 | 18 | 42 | 51 | 50 | ○ | ○ |
| Example 6 | 20/20 | 10 | 15 | 35 | 53 | 49 | ○ | ◎ |
| Example 7 | 25/25 | 10 | 12 | 28 | 65 | 58 | ○ | ◎ |
| Example 8 | 30/30 | 10 | 9 | 21 | N.B.[2)] | N.B. | ○ | ○ |

- to be continued -

Table 1 (cont'd.)

| | | | | | | | | |
|---|---|---|---|---|---|---|---|---|
| Comparative Example 3 | 60/0 | 10 | 9 | 21 | N.B. | N.B. | ○ | X |
| Comparative Example 4 | 5/5 | - | 27 | 63 | 14 | 12 | ○ | X |

(1) In the above table:

PDMS : Polydimethylsiloxane
PBA : Polybutyl acrylate
GMA : Glycidyl methacrylate
AN : Acrylonitrile
St : Styrene

(2) N.B. means that the test piece was not broken.

Example 9

Two hundred and ninety parts of the compound rubber latex obtained according to Example 1 was sampled and put in a separable flask equipped with a stirrer. The atmosphere of the flask was replaced by a nitrogen gas. Then, the contents of the flask were heated to 50°C. Thereafter, a mixed solution of 0.00025 part of ferrous sulfate, 0.00075 part of disodium ethylenediaminetetraacetate, 0.025 part of Rongalite and 10 parts of distilled water was added. A mixed solution of 10 parts of glycidyl methacrylate and 0.024 part of tert-butyl hydroperoxide was dropwise added thereto over 30 minutes. The reaction mixture was kept at an inner temperature of 70°C for 4 hours to carry out graft polymerization onto the compound rubber. Thus, the latex of a polyorganosiloxane graft copolymer (hereinafter referred to as S-13) was obtained. This graft copolymer latex was coagulated with an aqueous calcium chloride solution, and the coagulated product was filtered off and dried to obtain the dry powder of S-13. The conversion of glycidyl methacrylate was 98.5%, and the average particle size of the graft copolymer latex was 0.20 μm.

One piece of the S-13 film was put between two pieces of polyethylene terephthalate film of 100 μm in thickness (trade name, LUMIRROR; produced by Toray Industries, Inc.) and heat-pressed at 200°C for 10 minutes under a pressure of 0.98 MPa (10 $kg/cm^2$) to prepare a three-layer sheet of which the middle layer was 20 μm in thickness. A test piece of 10 mm in width was cut out of this sheet, and a 180-degree peeling test was carried out at 23°C and 0°C to measure the interlaminar bond strength. The results are shown in Table 2.

Example 10

A compound rubber latex was obtained in the same manner as in Example 1 except that 210 parts of POS-1 obtained according to Example 1 was sampled, 143 parts of distilled water was added thereto, the amounts of n-butyl acrylate, allyl methacrylate and tert-butyl hydroperoxide added were 27 parts, 0.454 part and 0.065 part, respectively, and that the amounts of ferrous sulfate, disodium ethylenediaminetertraacetate and Rongalite were 0.00037 part, 0.00111 part and 0.089 part, respectively. To this rubber latex was dropwise added a mixed solution of 10 parts of glycidyl methacrylate and 0.024 part of tert-butyl hydroperoxide over 30 minutes. The reaction mixture was kept at an inner temperature of 70°C for 4 hours to complete graft polymerization onto the compound rubber. The conversion of glycidyl methacrylate was 98.1%, and the average particle size of the graft copolymer latex was 0.20 μm. The resulting graft copolymer latex was coagulated with an aqueous calcium chloride solution, and the coagulated product was filtered off and dried to obtain the dry powder of a polyorganosiloxane graft copolymer (hereinafter referred to as S-14).

S-14 was evaluated in the same manner as in Example 9. The results are shown in Table 2.

Example 11

The dry powder of a polyorganosiloxane graft copolymer (hereinafter referred to as S-15) was obtained in the same manner as in Example 10 except that the amount of POS-1 sampled was 90 parts, the amount of distilled water added was 227 parts, the amounts of n-butyl acrylate, allyl methacrylate and tert-butyl hydroperoxide added were 63 parts, 1.26 part and 0.151 part, respectively, and that the amounts of ferrous sulfate, disodium ethylenediaminetetraacetate and Rongalite were 0.00073 part, 0.0022 part and 0.18 part, respectively. S-15 was evaluated in the same manner as in Example 9. The results are shown in Table 2. The conversion of glycidyl methacrylate was 97.2%, and the average particle size of the graft copolymer latex was 0.21 μm.

Example 12

Graft polymerization onto the compound rubber was carried out in the same manner as in Example 9 except that the amount of the compound rubber latex sampled was 360 parts, and a mixture of 5 parts of glycidyl methacrylate and 5 parts of butyl acrylate was used in place of 10 parts of glycidyl methacrylate. Thus, the latex of a polyorganosiloxane graft copolymer (hereinafter referred to as S-16) was obtained. This latex was coagulated with an aqueous calcium chloride solution, and the coagulated product was filtered off and dried to obtain the dry powder of S-16. The conversion of glycidyl methacrylate and butyl acrylate was 97.3%, and the average particle size of the graft copolymer latex was 0.20 μm. S-16 was evaluated in the same manner as in Example 9. The results are shown in Table 2.

Example 13

The latex of a graft copolymer (hereinafter referred to as S-17) was obtained in the same manner as in Example 12 except that 5 parts of methyl methacrylate was used in place of 5 parts of butyl acrylate. This latex was coagulated, filtered off and dried to obtain the dry powder of S-17. S-17 was evaluated in the same manner as in Example 9. The results are shown in Table 2. The conversion of glycidyl methacrylate and methyl methacrylate was 97.8%, and the

average particle size of the graft copolymer latex was 0.21 µm.

Example 14

Graft polymerization onto the compound rubber was carried out in the same manner as in Example 9 except that the amount of the compound rubber latex sampled was 240 parts, a mixture of 20 parts of glycidyl methacrylate, 10 parts of butyl acrylate and 10 parts of methyl methacrylate was used in place of 10 parts of glycidyl methacrylate, and that the amount of tert-butyl hydroperoxide added was 0.096 part. Thus, the latex of a polyorganosiloxane graft copolymer (hereinafter referred to as S-18) was obtained. This latex was coagulated with an aqueous calcium chloride solution, and the coagulated product was filtered off and dried to obtain the dry powder of S-18. The conversion of glycidyl methacrylate, butyl acrylate and methyl methacrylate was 98.8%, and the average particle size of the graft copolymer latex was 0.21 µm. S-18 was evaluated in the same manner as in Example 9. The results are shown in Table 2.

Example 15

The polyorganosiloxane graft copolymer (S-6) obtained in Example 5 was evaluated in the same manner as in Example 9. The results are shown in Table 2.

Example 16

The polyorganosiloxane graft copolymer (S-8) obtained in Example 6 was evaluated in the same manner as in Example 9. The results are shown in Table 2.

Comparative Example 5

Two hundred and ninety parts of the compound rubber latex obtained in the same manner as in Example 1 was sampled, and a mixed solution of 10 parts of methyl methacrylate and 0.024 part of tert-butyl hydroperoxide was added thereto. The resulting mixture was kept at an inner temperature of 70°C for 4 hours to carry out graft polymerization onto the compound rubber. The conversion of methyl methacrylate was 98.8%, and the average particle size of the graft copolymer latex was 0.20 µm. The resulting latex was coagulated with an aqueous calcium chloride solution, and the coagulated product was filtered off and dried to obtain the dry powder of a polyorganosiloxane graft copolymer (hereinafter referred to as S-19). This dry powder of S-19 was evaluated in the same manner as in Example 9. The results are shown in Table 2.

Comparative Example 6

A three-layer laminated sheet was prepared in the same manner as in Example 9 using an ethylene/ glycidyl methacrylate copolymer (trade name, Bondfast E; produced by Sumitomo Chemical Co., Ltd.). The sheet was then evaluated in the same manner as in Example 9. The results are shown in Table 2.

Example 17

The latex of a graft copolymer (hereinafter referred to as S-20) was obtained in the same manner as in Example 13 except that 5 parts of glycidyl acrylate was used in place of 5 parts of glycidyl methacrylate. The conversion of glycidyl acrylate and methyl methacrylate was 97.2%, and the average particle size of the graft copolymer latex was 0.21 µm. This latex was coagulated, filtered off and dried to obtain the dry powder of S-20. S-20 was evaluated in the same manner as in Example 9. The results are shown in Table 2.

Example 18

The latex of a graft copolymer (hereinafter referred to as S-21) was obtained in the same manner as in Example 13 except that 5 parts of diglycidyl itaconate was used in place of 5 parts of glycidyl methacrylate. The conversion of diglycidyl itaconate and methyl methacrylate was 98.0%, and the average particle size of the graft copolymer latex was 0.20 µm. This latex wax coagulated, filtered off and dried to obtain the dry powder of S-21. S-21 was evaluated in the same manner as in Example 9. The results are shown in Table 2.

Table 2

| | Kind of adhesive | Bond strength at 23°C (g/cm) | Bond strength at 0°C (g/cm) |
|---|---|---|---|
| Example 9 | S-13 | 890 | 840 |
| Example 10 | S-14 | 900 | 880 |
| Example 11 | S-15 | 850 | 800 |
| Example 12 | S-16 | 810 | 790 |
| Example 13 | S-17 | 820 | 780 |
| Example 14 | S-18 | 980 | 950 |
| Example 15 | S-6 | 1320 | 1230 |
| Example 16 | S-8 | 1160 | 1090 |
| Comparative Example 5 | S-19 | 50 | 40 |
| Comparative Example 6 | BF-E[1)] | 960 | 320 |
| Example 17 | S-20 | 810 | 790 |
| Example 18 | S-21 | 960 | 910 |

1) Bondfast E

## Claims

1. A polyorganosiloxane graft copolymer obtained by graft-polymerizing one or more kinds of monomer which have ethylenically unsaturated bond and contain at least an epoxy group-conatining vinyl monomer onto a compound rubber which is obtained by polymerizing an alkyl(meth)acrylate, a crosslinking agent for polyalkyl(meth)acrylate rubber and a graft-linking agent for polyalkyl(meth)acrylate rubber in the presence of a polyorganosiloxane rubber obtained by emulsion-polymerizing an organosiloxane, a crosslinking agent for polyorganosiloxane rubber and, if necessary, a graft-linking agent for polyorganosiloxane rubber in an amount of 0-10 wt.-% of the po-lyorganosiloxane rubber, whereby the polyorganosiloxane rubber component and the polyalkyl(meth)acrylate rubber component have been entangled and inseparably united with each other at the interface of both to form a crosslinked network, wherein the amount of the polyorganosiloxane rubber component is 1 to 99 wt.% and the amount of the polyalkyl(meth)acrylate rubber component is 99 to 1 wt.%, such that the total amount of both components is 100 wt.%, and in which the component derived from the epoxy group-containing vinyl monomer occupies a proportion of 1 to 30 wt.% of the whole graft copolymer.

2. A polyorganosiloxane graft copolymer according to claim 1, wherein the polyorganosiloxane rubber comprises polydimethylsiloxane as a main component.

3. A polyorganosiloxane graft copolymer according to claim 1, wherein the polyalkyl(meth)acrylate rubber comprises poly-n-butyl acrylate as a main component.

4. A polyorganosiloxane graft copolymer according to claim 1, wherein the amounts of the polyorganosiloxane rubber component and the polyalkyl(meth)acrylate rubber component constituting the compound rubber are 5 to 80 wt.% and 95 to 20 wt.%, respectively.

5. A polyorganosiloxane graft copolymer according to claim 1, wherein the crosslinking agent for the polyorganosiloxane rubber is a tetraalkoxysilane.

6. A polyorganosiloxane graft copolymer according to claim 1, wherein the graft-linking agent for the polyorganosiloxane rubber is (meth) acryloyloxyalkylsiloxane.

7. A polyorganosiloxane graft copolymer according to claim 1, wherein both the crosslinking agent and graft-linking agent for the polyalkyl(meth)acrylate rubber are allyl methacrylate.

8. A polyorganosiloxane graft copolymer according to claim 1, wherein the proportion of the component derived from one or more kinds of monomer which have an ethylenically unsaturated bond and contain at least an epoxy group-containing vinyl monomer to be graft-polymerized onto the compound rubber is 10 to 90 wt.% based on the whole polyorganosiloxane graft copolymer.

9. A polyorganosiloxane graft copolymer according to claim 1, wherein the proportion of the component derived from one or more kinds of monomer which have an ethylenically unsaturated bond and contain at least an epoxy group-containing vinyl monomer to be graft-polymerized onto the compound rubber is 10 to 50 wt.-% based on the whole polyorganosiloxane graft copolymer.

10. A polyorganosiloxane graft copolymer according to claim 1, wherein the proportion of the component derived from the epoxy group-containing vinyl monomer is 2 to 30 wt.%.

11. A polyorganosiloxane graft copolymer according to any one of claims 1 to 10, wherein the epoxy group-containing vinyl monomer is glycidyl methacrylate.

12. A polyorganosiloxane graft copolymer according to any one of claims 1 to 10, wherein the epoxy group-containing vinyl monomer is glycidyl acrylate.

**Patentansprüche**

1. Polyorganosiloxan-Pfropfcopolymer. erhalten durch Pfropfpolymerisieren einer oder mehrerer Monomerarten, welche eine ethylenisch ungesättigte Bindung aufweisen und mindestens ein epoxygruppenhaltiges Vinylmonomer enthalten, auf einen Mischkautschuk, welcher erhalten worden ist durch Polymerisieren eines Alkyl(meth)acrylats, eines Vernetzungsmittels für Polyalkyl(meth)acrylat-Kautschuk und eines Pfropfvernetzungsmittels für Polyalkyl (meth)acrylat-Kautschuk in Gegenwart eines Polyorganosiloxan-Kautschuks, der erhalten worden ist durch Emulsionspolymerisieren eines Organosiloxans, eines Vernetzungsmittels für Polyorganosiloxan-Kautschuk und, falls erforderlich, eines Pfropfvernetzungsmittels für Polyorganosiloxan-Kautschuk in einer Menge von 0-10 Gew.-% des Polyorganosiloxan-Kautschuks, wodurch die Polyorganosiloxan-Kautschukkomponente und die Polyalkyl(meth)acrylat-Kautschukkomponente verknäuelt und untrennbar miteinander an der Grenzfläche der beiden unter Bildung eines vernetzten Netzwerks vereinigt worden sind, wobei die Menge der Polyorganosiloxan-Kautschukkomponente 1-99 Gew.-% und die Menge der Polyalkly(meth)acrylat-Kautschukkomponente 99-1 Gew.-% betragen, so daß die Gesamtmenge beider Komponenten 100 Gew.-% beträgt. und wobei die von dem epoxygruppenhaltigen Vinylmonomer abgeleitete Komponente einen Bereich von 1-30 Gew-% des gesamten Pfropfcopolymeren besetzt.

2. Polyorganosiloxan-Pfropfcopolymer nach Anspruch 1, wobei der Polyorganosiloxan-Kautschuk Polydimethylsiloxan als eine Hauptkomponente umfaßt.

3. Polyorganosiloxan-Pfropfcopolymer nach Anspruch 1, wobei der Polyalkyl(meth)acrylat-Kautschuk Poly-n-butylacrylat als eine Hauptkomponente umfaßt.

4. Polyorganosiloxan-Pfropfcopolymer nach Anspruch 1, wobei die Mengen der Polyorganosiloxan-Kautschukkomponente und der Polyalkyl(meth)acrylat-Kautschukkomponente, welche den Mischkautschuk aufbauen, 5-80 Gew.-% bzw. 95 bis 20 Gew.-% betragen.

5. Polyorganosiloxan-Pfropfcopolymer nach Anspruch 1, wobei das Vernetzungsmittel für den Polyorganosiloxan-Kautschuk ein Tetraalkoxysilan ist.

6. Polyorganosiloxan-Pfropfcopolymer nach Anspruch 1, wobei das Pfropfvernetzungsmittel für den Polyorganosiloxan-Kautschuk (Meth)Acryloyloxyalkylsiloxan ist.

7. Polyorganosiloxan-Pfropfcopolymer nach Anspruch 1, wobei sowohl das Vernetzungsmittel als auch das Pfropfvernetzungsmittel für den Polyalkyl(meth)acrylat-Kautschuk Allylmethacrylat sind.

8. Polyorganosiloxan-Pfropfcopolymer nach Anspruch 1, wbei der Anteil der von einer oder mehreren Monomerarten, welche eine ethylenisch ungesättigte Bindung aufweisen und mindestens ein epoxygruppenhaltiges Vinylmonomer enthalten. abgeleiteten Komponente, welche auf den Mischkautschuk pfropfpolymerisiert wird. 10-90 Gew.-% beträgt. bezogen auf das gesamte Polyorganosiloxan-Pfropfcopolymer.

**9.** Polyorganosiloxan-Pfropfcopolymer nach Anspruch 1, wobei der Anteil der von einer oder mehreren Monomerarten, die eine ethylenisch ungesättigte Bindung aufweisen und mindestens ein epoxygruppenhaltges Vinylmonomer enthalten, abgeleiteten Komponente, welche auf den Mischkautschuk pfropfpolymerisiert wird, 10 bis 50 Gew.-% beträgt, bezogen auf das gesamte Polyorganosiloxan-Pfropfcopolymer.

**10.** Polyorganosiloxan-Pfropfcopolymer nach Anspruch 1, wobei der Anteil der von dem epoxygruppenhaltigen Vinylmonomer abgeleiteten Komponente 2 bis 30 Gew.-% beträgt.

**11.** Polyorganosiloxan-Pfropfcopolymer nach mindestens einem derAnsprüche 1 bis 10, wobei das epoxygruppenhaltige Vinylmonomer Glycidylmethacrylat ist.

**12.** Polyorganosiloxan-Pfropfcopolymer nach mindestens einem der Ansprüche 1 bis 10, wobei das epoxygruppenhaltige Vinylmonomer Glycidylacrylat ist.

**Revendications**

**1.** Copolymère greffé de polyorganosiloxane obtenu par polymérisation avec greffage d'un ou plusieurs types de monomère comprenant une liaison éthyléniquement insaturée et contenant au moins un monomère vinylique contenant un groupe époxy, sur un caoutchouc composé obtenu en polymérisant un (méth)acrylate d'alkyle, un agent de réticulation pour caoutchouc de poly((méth)acrylate d'alkyle) et un agent de liaison de greffage pour caoutchouc de poly((méth)acrylate d'alkyle), en présence d'un caoutchouc de polyorganosiloxane, obtenu par polymérisation en émulsion d'un organosiloxane, d'un agent de réticulation pour caoutchouc de polyorganosiloxane, et, si nécessaire, d'un agent de liaison de greffage pour caoutchouc de polyorganosiloxane présent en une quantité de 0-10 % en poids du caoutchouc de polyorganosiloxane, le composant caoutchouc de polyorganosiloxane et le composant caoutchouc de poly((méth)acrylate d'alkyle) étant ainsi enchevêtrés et unis de façon inséparable l'un à l'autre au niveau de leur interface en formant un réseau réticulé, dans lequel la quantité de composant caoutchouc de polyorganosiloxane est comprise entre 1 et 99 % en poids et la quantité de composant caoutchouc de poly((méth) acrylate d'alkyle) est comprise entre 99 et 1% en poids, de telle sorte que la quantité totale des deux composants soit de 100 % en poids, et dans lequel le composant dérivé du monomère vinylique contenant un groupe époxy est présent dans la proportion de 1 à 30 % en poids par rapport à la quantité totale du copolymère greffé.

**2.** Copolymère greffé de polyorganosiloxane conforme à la revendication 1, dans lequel le caoutchouc de polyorganosiloxane comprend du polydiméthylsiloxane comme composant principal.

**3.** Copolymère greffé de polyorganosiloxane conforme à la revendication 1, dans lequel le caoutchouc de poly((méth) acrylate d'alkyle) comprend du poly(acrylate de n-butyle) comme composant principal.

**4.** Copolymère greffé de polyorganosiloxane conforme à la revendication 1, dans lequel les proportions du composant caoutchouc de polyorganosiloxane et du composant caoutchouc de poly((méth)acrylate d'alkyle) constituant le caoutchouc composé sont comprises entre 5 et 80 % en poids et entre 95 et 20 % en poids, respectivement.

**5.** Copolymère greffé de polyorganosiloxane conforme à la revendication 1, dans lequel l'agent de réticulation pour le caoutchouc de polyorganosiloxane est un tétraalcoxysilane.

**6.** Copolymère greffé de polyorganosiloxane conforme à la revendication 1, dans lequel l'agent de liaison de greffage pour le caoutchouc de polyorganosiloxane est un (méth)acryloyloxyalkylsiloxane.

**7.** Copolymère greffé de polyorganosiloxane conforme à la revendication 1, dans lequel l'agent de réticulation et l'agent de liaison de greffage pour le caoutchouc de poly((méth)acrylate d'alkyle) sont tous deux du méthacrylate d'allyle.

**8.** Copolymère greffé de polyorganosiloxane conforme à la revendication 1, dans lequel la proportion du composant dérivé d'un ou plusieurs types de monomère comprenant une liaison éthyléniquement insaturée et contenant au moins un monomère vinylique contenant un groupe époxy, destiné à être polymérisé avec greffage sur un caoutchouc composé, est comprise entre 10 et 90 % en poids de la quantité totale de copolymère greffé de polyorganosiloxane.

**9.** Copolymère greffé de polyorganosiloxane conforme à la revendication 1, dans lequel la proportion du composant dérivé d'un ou plusieurs types de monomère comprenant une liaison éthyléniquement insaturée et contenant au moins un monomère vinylique contenant un groupe époxy, destiné à être polymérisé avec greffage sur un caoutchouc composé est comprise entre 10 et 50 % en poids de la quantité totale de copolymère greffé de polyorganosiloxane.

**10.** Copolymère greffé de polyorganosiloxane conforme à la revendication 1, dans lequel la proportion du composant dérivé du monomère vinylique contenant un groupe époxy est comprise entre 2 et 30 %.

**11.** Copolymère greffé de polyorganosiloxane conforme l'une quelconque des revendications 1 à 10, dans lequel le monomère vinylique contenant un groupe époxy est le méthacrylate de glycidyle.

**12.** Copolymère greffé de polyorganosiloxane conforme l'une quelconque des revendications 1 à 10, dans lequel le monomère vinylique contenant un groupe époxy est l'acrylate de glycidyle.